# EUROPEAN PATENT APPLICATION

(11) **EP 4 564 804 A2**
(43) Date of publication of application: **04.06.2025**
(21) Application number: 24212764.5
(22) Date of filing: 13.11.2024
(51) Int. Cl.: H04N 7/14, H04N 7/15

(54) **DYNAMIC MODIFICATION OF VIDEO CONTENT**

(30) Priority: 13.11.2023 GB 202317373
(71) Applicant: Reincubate Limited, London, Greater London SE1 2BE (GB)
(72) Inventor: FITZPATRICK, Aidan, London, SE1 2BE (GB); DANCY, Andrew, London, SE1 2BE (GB); SVEINBJORNSSON, Hlynur, London, SE1 2BE (GB)
(74) Representative: Elkiner, Kaya

(57) **Abstract**

Video processing devices, systems and methods are disclosed. A video processing device for processing a source video stream under the control of a video alteration application is provided. A user interface (UI) is presented via which a user specifies a change to be applied to the source video stream. Conditions for the change to be applied to the source video stream are determined. The content of the source video stream is analysed to determine when conditions for the change have been met, and the location within the source video stream to which the change is to be applied. In response, the source video stream is processed to dynamically apply the specified change at the determined location thereby to generate an output video stream.

## Description

### Field of the invention

The present invention relates to devices, systems and methods for video processing, in particular for the dynamic modification of video content utilised in video conferencing, streaming, and other real-time video communications. In particular, the present invention relates to processing video to dynamically alter its content in a manner supportive of and suitable for the purposes of real-time video communication.

### Background to the invention

In real-time video communications, such as video-conferencing and streaming, there is often a desire for users to control the appearance of the environment portrayed in the output video stream. A user may wish to ensure that the output of video communications is suitable for a particular context. For example, a user may wish to control the appearance of a background to make it more presentable, make it suitable for a business environment, to match corporate branding, or other such alterations.

By extension, when an employee is representing a company over video communications, the company may wish the employee to conform to company guidelines regarding how those communications are transmitted. For example, the company may require an employee to be dressed in a certain way and avoid profanities. Furthermore, the company may wish to provide reassurance to a third party with whom the employee is communicating via the video stream that the employee is authorised to perform a particular role on behalf of the company.

Another challenge involves the control and management of a video stream that is composed from multiple media sources. For example, in the live streaming of video games, the video stream typically includes many components that are displayed simultaneously - such as a game feed, a player-facing camera feed, audience interaction feeds and other media. It can be desirable for audience engagement and entertainment to change how these are presented depending on factors such as the state of gameplay. For example, if gameplay is not active (e.g. during a pre-game period), then it may be desirable to emphasise the player and audience feeds. If gameplay is particularly challenging for a player, it can be useful to deemphasise audience interaction, and even mute it to prevent player distraction.

In each case, there is a desire to carefully control the content of the video stream. However, the extent to which this is possible is often limited to what is within the capabilities of the user, and how they have prepared prior to the commencement of the video communication.

There are limits to how a user can react to control their output video stream, especially to unexpected or fast-moving events. For example, during intense gameplay, a player cannot easily divert their attention to change how their video stream is presented. During a business video call, a call participant may be unable to intervene to prevent unwanted external noise or other interruptions from influencing the call. It can also be impractical to make certain changes - for example, altering a home environment to conform with corporate branding.

It is against this background that the present invention has been devised.

### Summary of the invention

According to a first aspect of the present invention there may be provided a system for video processing. The system may be a real-time communications system and/or a video recording system. Preferably, the system is a video-conferencing system. The video processing device may comprise a networking module. Preferably, the networking module is configured to establish a connection, via a communications network, with at least one recipient of a video stream transmitted by the video processing device. The at least one recipient of the video stream may be another participant of a video-conferencing session.

The video processing device may comprise a telecommunications module, operable to download the video alteration application. The video processing device may be arranged to execute the downloaded video alteration application.

Preferably, the video processing system is configured to dynamically alter content of real-time video communications. The system may comprise a video processing device for processing a source video stream. The video processing device may comprise a display unit and a media source for generating the source video stream. The system may comprise a video alteration application that is executed on the video processing device and configures the video processing device to perform a video processing method.

The video processing device may be configured to present a user interface (UI), optionally via the display unit, via which a user specifies a change to be applied to the source video stream. The video processing device may be configured to determine conditions for the change to be applied to the source video stream. The video processing device may be configured to analyse the content of the source video stream to determine when conditions for the change have been met. The video processing device may be configured to determine the location within the source video stream to which the change is to be applied. The video processing device may be configured to process the source video stream in response, thereby to dynamically apply the specified change at the determined location. Thus, an output video stream can be generated.

The video processing device may be configured to display the output video stream, ideally on the display unit of the video processing device.

Preferably, the media source comprises at least one of: a camera; a subject application stream, such as a game stream.

Preferably, the video processing device is configured to transmit the output video stream to at least one receiver device, the at least one receiver device comprising a display unit for displaying the output video stream to an audience.

Preferably, the media source comprises a camera, and determining the location within the source video stream to which the change is to be applied comprises: determining a foreground region and a background region of the source video stream. Preferably, the change comprises at least one of: a foreground change being applied to the foreground region, and a background change being applied to the background region.

Preferably, the determination of the foreground region and background region may be performed, at least in part, by an Al segmentation module. The Al segmentation module may comprise a neural network trained to receive a source video stream, and output: at least one background image associated with the background region, and/or at least one foreground image associated with the foreground region.

Preferably, the change comprises applying both the foreground change and the background change, the foreground change and background change being applied in dependence on, and in complement with one another.

Preferably, the foreground change and background change being applied in dependence on, and in complement with one another comprises at least one of: complementary changes to: brightness, contrast, lighting, colour, hue, saturation and intensity.

Preferably, determining a foreground region comprises continuously monitoring the source video stream to detect a participant via at least one of: facial recognition, facial movement detection, and user movement relative to the background region.

Preferably, determining a foreground region and a background region of the source video stream comprises performing a depth estimation routine.

Preferably, the video processing device comprises at least one supplementary camera having an overlapping field of view with the camera generating the source video stream, the depth estimation routine comprising computing differences between outputs of the camera generating the source video stream and the at least one supplementary camera.

Preferably, determining a background region comprises forming a background image from the source video stream.

Preferably, forming the background image comprises progressively adding to the background image by continuously monitoring the source video stream to detect background areas previously occluded by the foreground region.

Preferably, forming the background image comprises performing an infill operation in which the content of background areas occluded by the foreground region is automatically generated in dependence on the content of background areas not occluded by the foreground region.

Preferably, the infill operation comprises passing the content of background areas not occluded by the foreground region to a neural network infill model trained on a library of background images, the output of the infill model enabling the formation of the background image.

Preferably, the system comprises the library of background images used to train the neural network infill model, and the library is periodically supplemented by background images captured by the video processing device.

Preferably, the background change applied to the background region comprises applying an effect to the background image, the effect being controlled, at least in part, by the change specified by the user via the UI.

Preferably, the UI enables a user to specify a descriptive prompt, passed as an input together with the background image, to a background transformation model, the background transformation model comprising a transformational neural network trained with images and associated descriptors to alter the background image to accord with the descriptive prompt.

Preferably, the background change applied to the background region comprises: performing a spatial analysis of the background image to determine the size, position and/or orientation of objects and surfaces displayed in the background image, and controlling the effect applied to preserve the size, position and/or orientation of at least part of those objects and surfaces.

Preferably, performing spatial analysis comprises executing feature detection routines, such as edge detection.

Preferably, the video processing device is configured by the application to apply a plurality of changes to the source video stream, each dependent on a respective set of conditions being determined by the analysis of the content of the source video stream.

Preferably, the media source comprises a camera, and determining conditions for the change to be applied to the source video stream comprises determining whether a participant is within the field of view of the camera.

Preferably, determining conditions comprises determining the behaviour of a participant within the field of view of the camera.

Preferably, the application configures the video processing device to transmit the source video stream to a state monitoring module, the state monitoring module being configured to analyse the source video stream, and in response output a category of detected state for use in determining conditions for the change to be applied to the source video stream.

Preferably, the state monitoring module comprises at least one of: a profanity detector, a nudity detector, a behaviour detector, an attire detector, and a sentiment detector;
for detecting a state of a participant, the outputting of a category of detected participant state including the detection by the or each respective detector.

Preferably, the user interface (III) enables a user to specify the conditions for the change to be applied to the source video stream.

Preferably, the media source comprises a subject application stream, such as a game stream, and the state monitoring module is configured to determine which subject application forms the basis of the subject application stream.

Preferably, the user interface is configured to present user-selectable options for controlling at least one of: a change to be applied to the source video stream, and conditions for the change to be applied to the source video stream;
wherein the options presented are dependent on the determined subject application.

Preferably, the state monitoring module is configured to analyse the source video stream for properties specific to the determined subject application, properties including at least one of: predetermined sounds, and visual landmarks.

Preferably, the video processing device comprises a plurality of media sources, each for generating a respective source video stream; the application configuring the video processing device to:
combine an output of the media sources together to form a composite video stream according to a first composition template;
analyse at least one of the source video streams to determine when conditions for a change have been met and in response reform the composite video stream according to a second composition template.

Preferably, the video processing device is configured by the application to: receive an effector input, and in response to determining whether the effector input fulfils a condition, apply a change to the source video stream.

Preferably, the effector input originates from a communication feed, such as an audience participation feed. Preferably, the effector input originates from an internal monitored state of the video processing device. Preferably, the effector input is received from a peripheral device connected to the video processing device.

Preferably, the effector input comprises a compliance report of the video processing device, such as the security level of the video processing device;
the compliance report being determined by an analysis by the video alteration application of the video processing device; and
the change applied to the source video stream comprises adding a visual and/or audio certificate, that certifies the determined compliance report.

Preferably, the certificate includes a time component, correlating to the time at which the compliance report was determined.

Preferably, the certificate is independently verifiable by a receiver of the output video stream by checking the certificate with a certificate authority.

Preferably, the certificate comprises a machine-readable code, such as a barcode, that contains a link to a certificate authority.

Preferably, the compliance report comprises a verification of the identity of a participant of the real-time video communication, and the change applied to the source video stream comprises including a reference to the identity of the participant, such as their name, position and qualification.

Preferably, the application is configured to verify the identity of the participant via biometric analysis, such as facial analysis, of the source video stream, the identity verification being used to compile the compliance report.

Preferably, processing the source video stream to dynamically apply the specified change at the determined location comprises: obfuscating content at that location, such as applying a blur function.

Preferably, the change applied comprises applying a sound alteration function.

Preferably, processing the source video stream to dynamically apply the specified change at the determined location comprises adding an overlay to at least the determined location of the source video stream.

Preferably, the video processing device is in communication with at least one scene alteration peripheral, such as background lighting, the video alteration application configuring the video processing device to analyse the content of the source video stream to determine when conditions for controlling the at least one scene alteration peripheral have been met, and in response send a control signal to the at least one scene alteration peripheral to cause a scene change in the source video stream.

According to a second aspect of the present invention there is provided a video processing method suitable for dynamically altering content of real-time video communications, comprising:
providing a source video stream;
presenting a user interface (UI) via which a user specifies a change to be applied to the source video stream;
determining conditions for the change to be applied to the source video stream;
analysing the content of the source video stream to determine when conditions for the change have been met, and the location within the source video stream to which the change is to be applied; and in response:
   processing the source video stream to dynamically apply the specified change at the determined location thereby to generate an output video stream; and
   displaying the output video stream.

According to a third aspect of the present invention there is provided a computer program comprising instructions which, when executed on a video processing device, configures the video processing device to:
present a user interface (UI) via which a user specifies a change to be applied to a source video stream;
determine conditions for the change to be applied to the source video stream;
analyse the content of the source video stream to determine:
   when conditions for the change have been met; and the location within the source video stream to which the change is to be applied; and in response:
   process the source video stream to dynamically apply the specified change at the determined location thereby to generate an output video stream.

It will be understood that features and advantages of different aspects of the present invention may be combined or substituted with one another where context allows.

For example, the features of the system described in relation to the first aspect of the present invention may be provided as part of the method described in relation to the second aspect of the present invention, and/or the computer program of the third aspect and vice-versa.

Furthermore, such features may themselves constitute further aspects of the present invention, either alone or in combination with others.

For example, the features of the segmentation module, transformation module, state monitoring module, infill module, video alteration application, user interface and effector inputs may themselves constitute further aspects of the present invention.

### Brief description of the drawings

In order for the invention to be more readily understood, embodiments of the invention will now be described, by way of example only, with reference to the accompanying drawings in which:
Figure 1 shows a schematic view of a video processing system according to various embodiments of the present invention; and
Figure 2 is a flow diagram of a general video processing method according to various embodiments of the present invention, the processing being suitable for use by the system of Figure 1.

### Specific description of the preferred embodiments

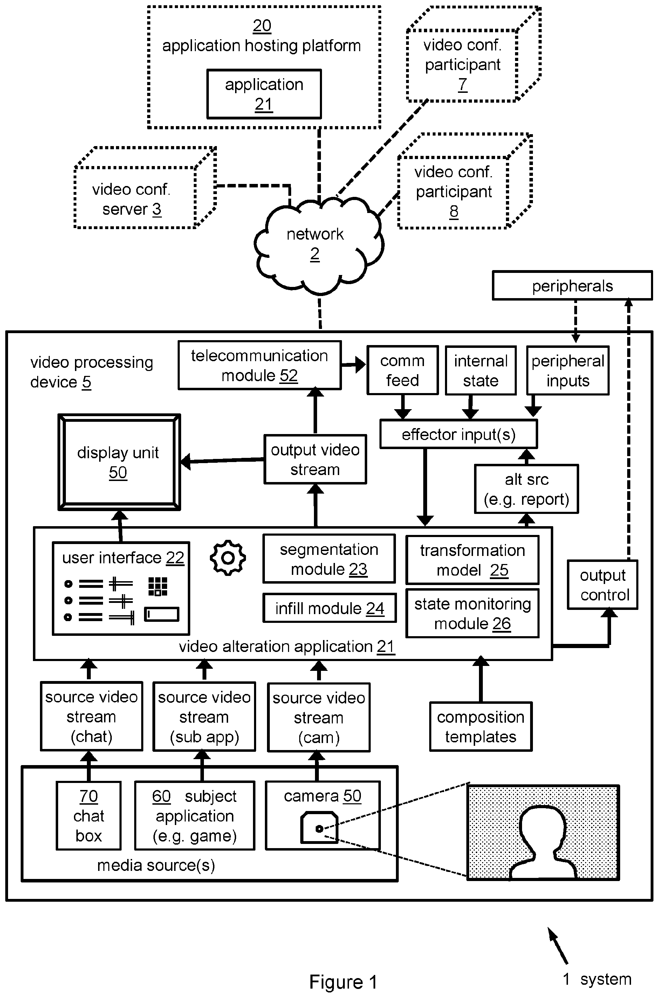

Figure 1 shows a schematic view of a video processing system 1, according to a first exemplary embodiment of the present invention. The video processing system is configured to dynamically alter content of video streams, especially those used for real-time video communications. In this embodiment, the video processing system 1 is capable of performing video conferencing as well as other video communications.

It should be noted that every component shown in and described with reference to Figure 1 is not necessarily an essential part of embodiments of the invention - they are merely included for completeness. Notably, some of the components may be simply used by or interact with the video processing system 1 rather than necessarily being integral parts of the system 1 itself. For example, a video conferencing server 3, video conferencing participants 7, 8, and an application hosting platform 20, each of which is shown in dotted outline in Figure 1, are considered to be components that interact with the system 1.

The system comprises a video processing device 5 having a media source in the form of a camera 50. In certain variations to the present embodiment, the camera 50 may be a component of a smartphone linked to a computer, the smartphone and computer configured for cooperation, including image processing that is split between them. In the present context, distinct components working in concert like this are generally considered to be the video processing device 5 as a whole. The video processing device 5 further comprises a display unit 51, and a telecommunication module 52.

The telecommunication module 52 is connected via a network 2 to an application hosting platform 20, which hosts a video alteration application 21. The application hosting platform 20 may be in the form of a single platform, or a combination of several different platforms - such as the Apple^{®} App Store^{®}, the Google^{®} Play^{™} Store, and/or the Microsoft^{®} Store - but merely for simplicity they are represented as a single entity in Figure 1.

The communications network 2 interconnects the components of the system 1, as well as the components that interact with the system 1. In various embodiments the network may be embodied by a wired and/or wireless local area network (LAN), peer-to-peer wireless connections (e.g. using at least one of Bluetooth and direct Wi-Fi), a wide area network (WAN) such as the Internet, or a combination of these.

Moreover, certain components of the system 1 shown in Figure 1 may reside on a single device and so, in this case, the communications network 2 may include intra-device communication channels.

Leading on from this, certain components shown in Figure 1 may be provided as part of or otherwise integrated with others. For example, the video conferencing server 3 and the application hosting platform 20 may be implemented on a common dual-functionality server. Moreover, components may not necessarily be in the form of a single physical machine or device. For example, the term "server" may encompass, for example, a distributed or "cloud" computing service, engine, service or platform.

Also, for simplicity and clarity, only single exemplary instances of most components of the system 1 are shown in Figure 1. Nonetheless, in practice, the system 1 will typically include at least thousands of video processing devices. Likewise, video conference participants 7, 8 may be equally numerous.

The video processing device 5 is configured to download and execute the video alteration application 21, which, when executed on the video processing device 5, configures it for operation in accordance with various embodiments as will be described.

The media source, in this case the camera 50, generates a source video stream which can be used in its unaltered form for traditional video communications such as video conferencing. To this end the source video stream can be passed to a video conferencing program running on the video processing device 5. In most cases, this enables the resulting output video stream to be transmitted by the video processing device 5, via the telecommunication module 52 to at least one receiver device having a display unit for displaying the output video stream to an audience. In Figure 1, the receivers shown include video conferencing participants 7, 8, but other receivers, such as game stream audience members, are possible.

However, embodiments of the invention enable the video stream to be dynamically altered for various use-cases, before being passed on to, for example, a video conferencing program.

Continuing with the example relating to video conferencing, a user participating in a video conference may wish to customise the appearance of their scene, such as improving their existing background without necessarily replacing it with a basic stock image.

The video alteration application 21, when executed on the video processing device 5, presents a user interface 22 on the display 50 with which a user can interact to specify an enhancement to be applied to transform their background.

In particular, a set of background effects are listed for user selection. These can include enhancement dimensions such as: architectural style (e.g. scandi, mid-century modern, coffee house, gothic, etc); tidiness (whether a greater or fewer number of superfluous background objects are included within the scene); colour affinity (i.e. wherein a particular colour palette, such as may be appropriate for corporate branding, should be incorporated more prominently in the scene); and branding (e.g. graphical or text-based elements inserted into the scene).

Where appropriate, background effects can be selectable in combination with one another. Also, variable control UI elements such as sliders are presented by the user interface 22 to receive a user input to define how pronounced each effect should be.

Upon selection, the video alteration application 21 controls the video processing device 5 to determine, in dependence on a set of conditions, where, how and/or when the selected background effects are applied.

One condition is whether it is possible to differentiate between a foreground and background region. If, for example, a video participant completely blocks the view of the background, it is not feasible to apply a background effect until at least a part of the background becomes visible.

Accordingly, the video alteration application 21 controls the video processing device to perform an analysis of the source video stream to determine which part of the source video stream relates to a foreground region and which relates to a background region.

In certain variations of the present embodiment, this can be achieved by performing image analysis on frames of the video stream to determine a relatively static region indicative of a background, and relatively dynamic region, which normally indicates a moving subject in the foreground. The image analysis may also comprise performing image recognition, such as facial recognition, in order to identify a subject in the foreground region and distinguish it from a background region.

In further variations of the present embodiment, a depth estimation routine can be carried out to determine the foreground region and the background region. For example, parallax cues can be used during movement of objects within the source video stream to estimate their relative proximity to the camera. Moreover, the video processing device may comprise at least one supplementary camera having an overlapping field of view with the camera generating the source video stream, and so the depth estimation routine can be assisted by computing differences between outputs of the camera generating the source video stream and the at least one supplementary camera. In further variants of the present embodiment, a depth sensor, having an overlapping field of view with the camera generating the source video stream, can be provided as part of the video processing device 5, and employed to determine the relative position of foreground and background regions.

In other variations of the present embodiment, the determination of the foreground region and background region may be performed by an AI segmentation module 23 that utilises a neural network trained to receive a source video stream, and output at least one background image associated with the background region, and at least one foreground image associated with the foreground region.

Thus, an image segmentation process is performed that generally determines a foreground region and a background region. These regions can be individually processed to apply relevant effects, and then combined together to form a recomposed video stream.

Variants of the present embodiment enable further image processing, often based on certain conditions, which can be beneficial from the perspective of providing a better application of enhancements, such as background effects.

One additional condition determined by the video processing device is whether a video conference participant is within the field of view of the camera, and thus the degree to which the existing background is visible. When performing responsive, real-time image processing, it is beneficial to obtain a full frame background image, unobscured by a foreground region typically featuring the video participant.

Accordingly, a background image formation process is carried out, the process being responsive to the extent to which the foreground region occludes the background region.

In certain embodiments, the background image formation process comprises progressively adding to the background image by continuously monitoring the source video stream to detect background areas previously occluded by the foreground region. Thus, as a video participant moves relative to their background, the background image gradually becomes more complete.

Nonetheless, in certain situations, a part of the background image may remain occluded by the foreground. To address this, the background image formation process comprises performing an infill operation in which the content of background areas occluded by the foreground region is automatically generated in dependence on the content of background areas not occluded by the foreground region. In other words, parts of the background image that are visible can be used as a starting point when estimating how the parts of the background image that are not visible might appear.

In certain embodiments, the infill operation comprises passing the content of background areas not occluded by the foreground region to an AI infill module 24. The AI infill module comprises a neural network trained on a library of background images, such that the output of the infill module enables the formation of the entire full frame background image. The library of background images may include associated sets, members of each set comprising at least one incomplete background image, and at least one associated complete background image. Accordingly, the neural network can be trained how to complete an incomplete image.

The AI infill module may be improved over time via periodic updates provided by the video alteration application. In particular, the system 1 comprises the library of background images used to train the neural network infill model, and the library is periodically supplemented by background images captured by the video processing device, and other video processing devices compatible with the system 1.

Thus, once a complete background image is formed, an effect can be applied to it, as controlled by the change specified by the user via the user interface 22. As described above, a predetermined set of background effects can be listed for user selection. However, in certain variants of the present embodiment, the user interface 22 may be configured to receive an ad-hoc description, for example via text input. Furthermore, the predetermined set of background effects, when selected by a user, can be converted into text in dependence on whether they have been selected, and how pronounced a user has selected those effects to be. These can be combined with the ad-hoc description. Thus, a descriptive prompt that describes the effect to apply to the background image can be generated.

The descriptive prompt can then be passed as an input together with the background image to a background transformation model 25. The background transformation model 25 comprises a transformational neural network, trained with images and associated descriptors, to alter the background image to accord with the descriptive prompt.

Beneficially, as the original background is used as a starting point for generating the subsequent background image, visual discontinuities caused by ineffective real-time segmentation of the foreground and background can be minimised. For example, the newlygenerated background image may be of a previously untidy room that has been enhanced by the background transformation model to appear to be more tidy. Many key features, such as the position of furniture and surfaces, will generally be retained in the enhanced background image, and so if an original part of the background is inadvertently revealed by ineffective image segmentation, then the perceived effect will be less jarring than if the fabricated background has no resemblance to the original background.

To further leverage this advantage, certain variants to the present embodiment include a video processing device 5 that is configured by the video alteration application 21 so that the background change applied to the background region comprises performing a spatial analysis of the background image. This can be done to determine the size, position and/or orientation of objects and surfaces displayed in the background image, so that the background effect can be controlled to preserve the size, position and/or orientation of at least part of those objects and surfaces. Spatial analysis may comprise executing feature detection routines, such as edge detection, for example.

Another way a user, participating in a video conference, may wish to customise the appearance of their scene is via the enhancement of their foreground. This is facilitated by the image segmentation of the foreground and background regions as described above, and a change to the foreground region can be applied simultaneously with the change to the background region.

Again, the user interface presented to a user can allow control over the effect applied to the foreground region, for example, enhancing properties such as colour balance, skin tone, skin smoothness, and the like. Moreover, the video alteration application configures the video processing device to apply both the foreground change and the background change in dependence on, and in complement with one another. Complementary changes to brightness, contrast, lighting, colour, hue, saturation and/or intensity can be applied for example, to ensure that the changes to the background region and foreground region result in a composite video stream that looks natural.

The video processing device 5 can also be configured by the video alteration application 21 to apply a plurality of changes to the source video stream. Each change can be dependent on a respective set of conditions being determined by the analysis of the content of the source video stream. Furthermore, in certain variations, the user interface (UI) enables a user to specify the conditions for a change to be applied to the source video stream.

As described, a condition can be dependent on whether a participant is within the field of view of the camera. But furthermore, the condition for applying a particular alteration may be dependent on the determined behaviour of the participant, or even the detection of predetermined occurrences or states within the source video stream. To this end, the application configures the video processing device 5 to transmit the source video stream to a state monitoring module 26. The state monitoring module 26 is configured to analyse the source video stream, and in response output a detected state for use in determining conditions for the change to be applied to the source video stream.

In particular, the state monitoring module 26 may be configured to detect the state of a participant, and in response enable the application of a suitable effect.

For example, in certain variations to the present embodiment, the state monitoring module 26 may comprise a profanity or nudity detector, in which case a censorship effect can be triggered to apply - i.e. wherein the source video stream is altered to block out profanities or nudity via obfuscating at least that part of the source video stream. This can be, for example, via the blurring of inappropriate images or by applying a sound alteration function to change the audio signal (e.g. bleeping) to eliminate spoken profanities. The state monitoring module may be configured to identify content that is being conveyed that is considered sensitive, confidential or secret, and apply a similar effect to obfuscate that content, such as through redaction.

In other variations, the state monitoring module may comprise an attire detector, to determine the way a video call participant is dressed, for example. This can be used to trigger a variety of effects depending on the configuration set by the user via the user interface. For example, if the user has specified that changes should be made to emphasise a specified colour palette (e.g. colours matching corporate branding), then articles of clothing worn by the participant can be colourised to conform with the specified colour palette. Similarly, a tie or shirt can be altered to include a logo preset by the user via the user interface. Alternatively, articles of clothing can be substituted. If it is desirable for a video call participant to be smartly-dressed, for example, the change triggered by the attire detector can substitute a formal shirt for an informal one.

In further variations, the state monitoring module 26 may comprise a sentiment detector, and/or a behaviour detector, with alterations to the source video stream being controlled in dependence on the detected participant state. For example, if the participant is detected to be angry, then the content of the source video stream can be controlled to reduce the perceived anger of the subject, for example, by changing their facial expressions and altering the pitch and/or cadence of their speech. This can be useful in certain business or teaching scenarios, for example.

So far, the main use-case provided to exemplify the operation of the video processing system is that of video conferencing. In this example, a camera 50 is used as the media source via which the source video stream is generated. However, other media sources can be used instead of or in combination with the camera 50.

For example, the media source may be a stream of the audio-visual (AV) output of a subject application 60 such as a video game, or a slide presentation program. Such an AV output is typically presented on the display unit 51 of the video processing device 5, but can also be converted to define an alternative or additional source video stream to that of the camera 50.

In particular, in the streaming of games, it is typically commonplace to utilise multiple media sources such as camera facing towards the game player (i.e. the player cam), as well as the subject application in the form of the video game. These multiple media sources, each generating their respective source video stream, are typically combined together into a composite video stream, typically with the player cam feed resized to fit within a small area within the game feed.

In such alternative use-cases, the video alteration application 21 can configure the video processing device to detect what the or each media source is, and so how a video stream from a respective media source should be treated. Each source video stream may be analysed differently to determine, for example, when certain conditions have been met and how and where to apply a change to the source video stream. Moreover, where there are multiple simultaneous source video streams, conditions detected via the analysis of content in one video stream can cause a change to be applied in another video stream.

To this end, where the media source comprises a subject application stream, such as a video game stream, the state monitoring module is configured to determine which subject application forms the basis of the subject application stream. This can be performed by analysing the content of the source video stream originating from the media source and/or by receiving an identification of the subject application when obtaining the stream from it.

Following identification, it is possible to provide appropriate control options to the user via the user interface 22.

Specifically, the user interface 22 is configured to present user-selectable options for controlling a change to be applied to the (or an alternative) source video stream, and/or options for controlling the conditions for the change to be applied to the (or an alternative) source video stream. The user-selectable options presented are dependent on the determined subject application 60.

For example, in the video game stream use-case, there may be source video streams from three media sources: a game feed (via subject application 60), a player cam feed (e.g. via the camera 50), and an audience participation feed (e.g. a chat box 70). The video processing device 5 can be configured to continually analyse the content of the game feed to determine a variety of game states. These may include whether a particular game phase has started (e.g. differentiating between pre-game menus, an initial preparatory phase of a game, which game mode has been selected, etc). The game states may also include information about in-game situations, such as a game character's health, resources, mode of travel, location within the game environment, etc. This can be achieved via the analysis of properties specific to the game application, such as the detection of predetermined sounds (e.g. a sound to indicate the start of a particular game phase) and/or visual landmarks (e.g. indicia representing health, amount of resources, etc). At the same time, the content of the player cam feed can be continually analysed as described above in relation to the video conferencing use-case, to determine properties such as player sentiment, mood and/or excitement. The audience participation feed may also be monitored to determine whether certain audience actions are performed, such as new subscriptions or follows, predetermined classes of comments are submitted, and the like.

Accordingly, an action can be taken in response to detecting a certain condition, or combination of conditions in the feeds from each one of the media sources. The action can dynamically alter the content of one or more of the source video streams in a manner stipulated via the user interface 22.

For example, if it is detected in the game feed 60 that the player's in-game character has low health, the source video stream corresponding to the player cam feed can be altered to change the colour balance to show the player in the foreground region as appearing sickly, and the background region as monochromatic. If it is detected in the game feed that the player's character is travelling using a particular mode of transport, then the source video stream corresponding to the player cam feed can be altered to add layers to the foreground and background regions to provide the appearance that the player is travelling using the same mode of transport - for example, with their face shown within a car or spaceship. If it is detected that a player's character has acquired a particular resource, then the resource can be shown in an altered background region of the player feed.

By way of another example, if it is detected from the player cam feed that the player is excited or tense, then the source video stream associated with the game feed 60 can be altered to introduce music of an appropriate tempo, the music being accessed from a media database. If it is detected from the player cam feed that the player is confused, then the audience participation feed can be updated with images of question marks. If it is detected from the player cam feed that the player is concentrating, and simultaneously it is detected that a challenging game state has been entered, the audience participation feed can be altered by the video alteration application 21 such that it is automatically minimised or even muted to prevent player distraction.

Additionally, conditions detected in the video streams can be used to control how those video streams are emphasised relative to one another.

Specifically, the video alteration application configures the video processing device to combine an output of the media sources together to form a composite video stream according to a first composition template. At least one of the source video streams can be then analysed to determine when conditions for a change have been met and in response reform the composite video stream according to a second composition template. Further composition templates can be applied under alternative detected conditions.

For example, if it is detected from the content of the game feed that a main game phase has not yet started and, for example, the player is at a pre-game menu, a composition template can be automatically chosen that hides the game feed, and emphasises the player cam and audience participation feeds such that the player cam occupies the majority of the composite video stream. If it is subsequently detected that a main game phase has started, then a composition template is chosen that predominantly features the game feed - occupying the majority of the composite video stream, with the player cam and the audience participation feed being shrunk to occupy only a small section of the composite video stream. Additionally, a background region of the source video stream associated with the player cam may be rendered to be transparent to firstly emphasise only the player in the foreground, and secondly to provide visibility of a greater area of the underlying game feed.

Thus, examples have been given above concerning how to automatically and dynamically trigger a change in the content of source video streams based primarily on the analysis of the content within those source video streams. However, it will be understood that other effectors can be used to trigger changes in the content of video streams.

In general terms, the video processing device can further be configured by the video alteration application to receive an effector input, and in response to determining whether the effector input fulfils a condition, apply a change to the source video stream.

One example of this is when the effector input originates from a communication feed, such as an audience participation feed. Rather than analysing the source video content associated with such a feed as described above, the video alteration application connects with the feed typically via an application programming interface (API). Thus, checking for conditions can involve the processing of, for example, text data directly from the communication feed. This is generally more processor-efficient than performing image analysis.

Another example is when the effector input originates from an internal monitored state of the video processing device and/or a peripheral device connected to the video processing device.

For example, the video processing device may have sensors that monitor, for example, the temperature of the graphical processing unit (GPU). As the GPU is used to play a game, its temperature fluctuates, and can peak during periods of fast moving action within a GPU intensive game environment. Accordingly, the GPU can be used as a proxy for game activity, and thus can be used to trigger changes in the content of one or more video streams. For example, the colour palette with which the background region of the video stream associated with the player cam can be shifted towards a warmer palette when the GPU temperature is relatively high, and a cooler palette when the GPU temperature is relatively low. Accordingly, sensors internal to the video processing unit can serve as effector inputs.

Peripheral inputs, such as keyboard inputs can be used as another example of an effector input that can trigger changes in video stream content. For example, keystroke rates can be used as a way of determining the activity and engagement of a player when in-game. Relatively fast keystrokes, especially those used for game character control, can be indicative of relative intense gameplay. A user can thus select a condition, via the Ul, that governs the tempo of background music in dependence on keystroke rates, with faster keystrokes causing an increase in tempo, and vice-versa.

Another example of a peripheral is a smartwatch. The smartwatch may have a heart rate monitor, and be connected wirelessly to the video processing device such that the heart rate of the user can be monitored at the video processing unit, and used as an effector input. As a player's excitement and heart rate increases, this can be used to trigger a change in a video stream content. For example, a heart rate indicator element may be rendered as an overlay to a video stream, and configured to display an animation dependent on the communicated heart rate of the player - e.g. beating faster when the player's heart rate is relatively elevated. Again, the display and response of such an overlay can be specified via the user interface by the player.

In further variants to the present embodiment, it is possible to also to control components such as peripherals in response to analysing the content of a source video stream. For example, control signals, images and/or sounds may be transmitted by the video processing device to peripherals that can be used to modify a scene.

For example, the video processing device may be in communication with at least one scene alteration peripheral, such as background lighting, and the video alteration application, configures the video processing device to analyse the content of the source video stream to determine when conditions for controlling the at least one scene alteration peripheral have been met. In response, the video alteration application configures the video processing device to send a control signal to the at least one scene alteration peripheral to cause a scene change in the source video stream.

Effector inputs can also originate from alternative sources, for example generated by the operation of a routine or application executed on the video processing device. For example, the video alteration application can be configured to perform an analysis of hardware and/or software configurations of the video processing device, and in response generate a report.

For example, the report can be a compliance report that reflects the determined security level of the image processing device. The compliance report can be used as an effector input, with the change being applied to one or more source video streams being the addition of a security certificate. The security certificate is typically a visual and/or audio certificate that certifies the outcome of the determined compliance report - for example, the determined security level of the image processing device.

The certificate, added to the output video stream, can be used by a third party to verify a particular state of the video communications. For example, in video conferencing, the certificate may be in the form of a barcode overlaid onto a portion of the video stream received by a video conferencing participant. The barcode can be scanned by the receiver, and in doing so links to a certificate authority that can provide independent approval of the provenance and security level certified by the certificate.

Additionally, the audio and/or visual certificate may change over time to reflect the recency of the certificate. For example, the certificate typically contains a time component, correlating to the time at which the compliance report was determined, providing reassurances during real-time video communications that a malicious actor has not reused a certificate from a historic video stream.

The compliance report and/or certificate may also include a verification of the identity of a participant of the real-time video communications. In certain embodiments, the verification may be a result of a user using their personal credentials to log into the video processing device. However, in additional variations to the present embodiment, the video alteration application can be configured to verify the identity of the participant via biometric analysis, such as facial analysis, of the source video stream.

The identity verification being used to compile the compliance report and included within the certificate. Accordingly, a receiver of the video stream can be provided with reassurances as to the identity of the video conferencing participant with whom they are communicating. Additional to, or instead of the certificate, a reference to the identity of the participant may be displayed as an overlay within the output video stream. For example, the participant's name, position, qualification, contact details etc can be displayed as a text-based overlay.

Additionally, the size and position of overlaid elements, such as the text-based overlay and visual certificate, may be determined by analysis of the source video stream. Beneficially, the source video stream can be analysed to determine suitable areas to include such elements - ideally without overly obscuring foreground regions, and particularly the face of the participant. In response, the source video streams can be processed to include additional overlaid elements at suitable locations. Furthermore, the source video stream can be continually updated to change the position of those overlaid elements if the suitability of an area changes, for example due to participant movement.

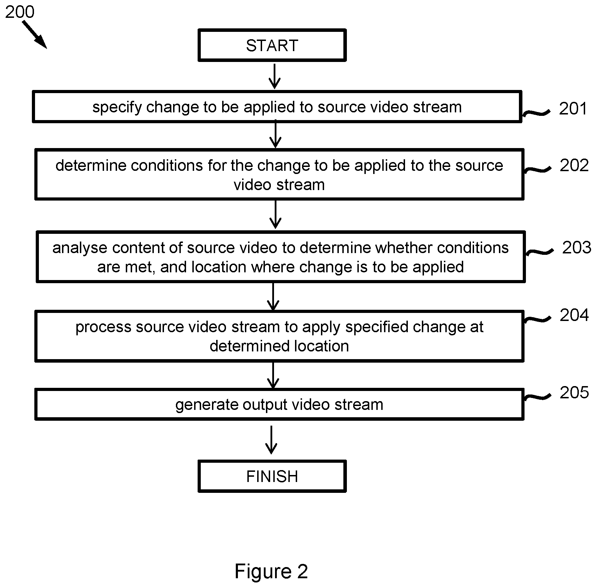

Accordingly, embodiments of the invention can provide an improved video processing system that is capable of performing the generalised video processing method as set out in Figure 2 in which: changes to be applied to the source video stream are specified 201, conditions are determined for those changes to be applied 202, the content of a source video stream is analysed to determine whether conditions have been met, and where the change is to be applied 203, processing is carried out to apply the specified changes at the appropriate location 204, and an output video stream is generated.

Thus, the system and method allow the dynamic modification of video content in a way that addresses the challenges set out in the background section.

Although the invention has been described in conjunction with specific embodiments thereof, it is evident that many alternatives, modifications and variations will be apparent to those skilled in the art. Accordingly, it is intended to embrace all such alternatives, modifications and variations.

## Claims

1. A video processing system for dynamically altering content of real-time video communications, the system comprising:
a video processing device for processing a source video stream, the video processing device comprising a display unit and a media source for generating the source video stream; and
a video alteration application, executed on the video processing device, configuring the video processing device to:
present a user interface (UI) via the display unit via which a user specifies a change to be applied to the source video stream;
determine conditions for the change to be applied to the source video stream;
analyse the content of the source video stream to determine when conditions for the change have been met, and the location within the source video stream to which the change is to be applied; and in response:
process the source video stream to dynamically apply the specified change at the determined location thereby to generate an output video stream; and
display the output video stream on the display unit of the video processing device.

2. The system of claim 1, wherein the media source comprises a camera, and determining the location within the source video stream to which the change is to be applied comprises: determining a foreground region and a background region of the source video stream, the change comprising at least one of: a foreground change being applied to the foreground region, and a background change being applied to the background region.

3. The system of claim 2, wherein the change comprises applying both the foreground change and the background change, the foreground change and background change being applied in dependence on, and in complement with one another, including at least one of complementary changes to: brightness, contrast, lighting, colour, hue, saturation and intensity.

4. The system of claim 2 or claim 3, wherein determining a foreground region comprises continuously monitoring the source video stream to detect a participant via at least one of: facial recognition, facial movement detection, and user movement relative to the background region.

5. The system of any one of claims 2 to 4, wherein, determining at least one of the foreground region and the background region of the source video stream comprises performing a depth estimation routine; and
the video processing device comprises at least one supplementary camera having an overlapping field of view with the camera generating the source video stream, the depth estimation routine comprising computing differences between outputs of the camera generating the source video stream and the at least one supplementary camera.

6. The system of any one of claims 2 to 5, wherein determining a background region comprises forming a background image from the source video stream;
wherein forming the background image comprises progressively adding to the background image by continuously monitoring the source video stream to detect background areas previously occluded by the foreground region;
wherein forming the background image comprises performing an infill operation in which the content of background areas occluded by the foreground region is automatically generated in dependence on the content of background areas not occluded by the foreground region; and
wherein the infill operation comprises passing the content of background areas not occluded by the foreground region to a neural network infill model trained on a library of background images, the output of the infill model enabling the formation of the background image

7. The system of claim 2, wherein determining a foreground region and a background region of the source video stream is performed, at least in part, by an AI segmentation module, the AI segmentation module comprising a neural network trained to receive a source video stream, and output: at least one background image associated with the background region and/or at least one foreground image associated with the foreground region..

8. The system of any one of claims 2 to 7, wherein the background change applied to the background region comprises applying an effect to the background image, the effect being controlled, at least in part, by the change specified by the user via the UI; and wherein the background change applied to the background region comprises: performing a spatial analysis of the background image to determine the size, position and/or orientation of objects and surfaces displayed in the background image, and controlling the effect applied to preserve the size, position and/or orientation of at least part of those objects and surfaces.

9. The system of claim 8, wherein the UI enables a user to specify a descriptive prompt, passed as an input together with the background image, to a background transformation model, the background transformation model comprising a transformational neural network trained with images and associated descriptors to alter the background image to accord with the descriptive prompt.

10. The system of any preceding claim, wherein the video alteration application configures the video processing device to transmit the source video stream to a state monitoring module, the state monitoring module being configured to analyse the source video stream, and in response output a category of detected state for use in determining conditions for the change to be applied to the source video stream.

11. The system of claim 10, wherein the media source comprises a subject application stream, such as a game stream, and the state monitoring module is configured to determine which subject application forms the basis of the subject application stream; and wherein the user interface is configured to present user-selectable options for controlling at least one of: a change to be applied to the source video stream, and conditions for the change to be applied to the source video stream; wherein the options presented are dependent on the determined subject application.

12. The system of any preceding claim, wherein the video processing device comprises a plurality of media sources, each for generating a respective source video stream; the application configuring the video processing device to:
combine an output of the media sources together to form a composite video stream according to a first composition template; and
analyse at least one of the source video streams to determine when conditions for a change have been met and, in response, reform the composite video stream according to a second composition template.

13. The system of any preceding claim, wherein the video processing device is configured by the application to: receive an effector input, and in response to determining whether the effector input fulfils a condition, apply a change to the source video stream; wherein the effector input originates from at least one of:
a communication feed, such as an audience participation feed; an internal monitored state of the video processing device; a peripheral device connected to the video processing device; and a compliance report of the video processing device, such as the security level of the video processing device; optionally:
wherein the compliance report is determined by an analysis by the video alteration application of the video processing device; and
the change applied to the source video stream comprises adding a visual and/or audio certificate, that certifies the determined compliance report;
wherein the certificate includes a time component, correlating to the time at which the compliance report was determined;
wherein the certificate is independently verifiable by a receiver of the output video stream by checking the certificate with a certificate authority;
wherein the certificate comprises a machine-readable code, such as a barcode, that contains a link to a certificate authority;
wherein the compliance report comprises a verification of the identity of a participant of the real-time video communication, and the change applied to the source video stream comprises including a reference to the identity of the participant, such as their name, position and qualification;
wherein the video alteration application is configured to verify the identity of the participant via biometric analysis, such as facial analysis, of the source video stream, the identity verification being used to compile the compliance report;
wherein processing the source video stream to dynamically apply the specified change at the determined location comprises at least one of: obfuscating content at that location, such as applying a blur function; applying a sound alteration function; and adding an overlay to at least the determined location of the source video stream; and
wherein the video processing device is in communication with at least one scene alteration peripheral, such as background lighting, the video alteration application configuring the video processing device to analyse the content of the source video stream to determine when conditions for controlling the at least one scene alteration peripheral have been met, and in response send a control signal to the at least one scene alteration peripheral to cause a scene change in the source video stream.

14. A video processing method suitable for dynamically altering content of real-time video communications, comprising:
providing a source video stream;
presenting a user interface (UI) via which a user specifies a change to be applied to the source video stream;
determining conditions for the change to be applied to the source video stream;
analysing the content of the source video stream to determine when conditions for the change have been met, and the location within the source video stream to which the change is to be applied; and in response:
processing the source video stream to dynamically apply the specified change at the determined location thereby to generate an output video stream; and
displaying the output video stream.

15. A computer program comprising instructions which, when executed on a video processing device, configures the video processing device to:
present a user interface (UI) via which a user specifies a change to be applied to a source video stream;
determine conditions for the change to be applied to the source video stream;
analyse the content of the source video stream to determine:
when conditions for the change have been met;
the location within the source video stream to which the change is to be applied; and in response:
process the source video stream to dynamically apply the specified change at the determined location thereby to generate an output video stream.
